# EUROPÄISCHE PATENTSCHRIFT

(11) **EP 3 341 945 B1**
(45) Veröffentlichungstag und Bekanntmachung des Hinweises auf die Patenterteilung: **24.07.2019**
(21) Anmeldenummer: 16758091.9
(22) Anmeldetag: 20.08.2016
(51) Int. Cl.: H01F 5/02, H01F 6/06, H01F 36/00, H01F 41/04

(54) **TRANSFORMATOR, WICKELKÖRPER DAFÜR UND VERFAHREN ZUR HERSTELLUNG EINES WICKELKÖRPERS**
TRANSFORMER, COIL FORMER FOR SAID TRANSFORMER, AND METHOD FOR PRODUCING A COIL FORMER
TRANSFORMATEUR, CORPS D'ENROULEMENT ASSOCIÉ ET PROCÉDÉ DE FABRICATION D'UNE BOBINE D'ALLUMAGE

(30) Priorität: 27.08.2015 DE 102015114208
(43) Veröffentlichungstag der Anmeldung: 04.07.2018
(73) Patentinhaber: Karlsruher Institut für Technologie, 76131 Karlsruhe (DE)
(72) Erfinder: HELLMANN, Sebastian, 76137 Karlsruhe (DE)
(86) Internationale Anmeldenummer: PCT/EP2016/001412
(87) Internationale Veröffentlichungsnummer: WO 2017/032451

(56) Entgegenhaltungen:
- US-A- 5 683 059
- ISE T ET AL: "Experimental study on quench current of superconducting coils for 50-60 Hz use", IEEE TRANSACTIONS ON APPLIED SUPERCONDUCTIVITY, IEEE SERVICE CENTER, LOS ALAMITOS, CA, US, Bd. 3, Nr. 1, 1. März 1993 (1993-03-01), Seiten 285-288, XP011503304, ISSN: 1051-8223, DOI: 10.1109/77.233486

## Beschreibung

Die Erfindung betrifft einen supraleitenden strombegrenzenden Transformator, einen Wickelkörper dafür und ein Verfahren zur Herstellung des Wickelkörpers.

Aus dem Stand der Technik sind supraleitende strombegrenzende Transformatoren bekannt, wobei ein solcher Transformator eine normalleitende oder eine supraleitende Primärwicklung haben kann, die um einen Transformatoreisenkern gewickelt ist. Der Primärwicklung zugeordnet ist eine supraleitende Sekundärwicklung, die zur besseren Fixierung der supraleitenden Drähte auf einen Wickelkörper gleichmäßig an diesem anliegend aufgewickelt ist. Die beiden Wicklungen sind koaxial angeordnet. Zur Kühlung der supraleitenden Wicklung(-en) ist ein Kühlbad mit flüssigem Stickstoff in einem innerhalb des Transformators angeordneten Kryostaten vorgesehen.

Das Prinzip des supraleitenden strombegrenzenden Transformators beruht dabei auf der gezielten Erwärmung des supraleitenden Materials in der/den Wicklung(en) bspw. im Kurzschlussfall des Stromnetzes. Mit der Erwärmung steigt der elektrische Widerstand des Supraleiters stark an und führt unmittelbar zu einer Reduktion des fließenden Kurzschlussstromes. Im Kurzschlussfall sind die in den Transformatorwicklungen fließenden Ströme um ein Vielfaches größer als im Normalbetriebsfall, wodurch das durch die Ströme erzeugte Streufeld ebenfalls stark ansteigt. Das magnetische Streufeld verursacht eine Krafteinwirkung auf die beiden Wicklungen des Transformators, deren Richtung von dem Streuspalt weg weist.

Neben der ansteigenden Krafteinwirkung auf den Supraleiter und dessen gleichzeitiger Erwärmung dehnen sich die Leiter der supraleitenden Sekundärwicklung aus. Diese Ausdehnung findet aufgrund der Art der Wicklung in radialer Richtung statt, so dass sich im Kurzschlussfall die supraleitende Wicklung an manchen Stellen radial auswölbt und mechanisch beschädigt werden kann. Das führt zur Beschädigung der supraleitenden Wicklung und macht eine aufwändige Reparatur oder sogar einen teuren Austausch notwendig.

Die DE 20 2013 100 358 U1 beschreibt ein Induktivitätsbauteil mit einem Kern aus mehreren Schenkelelementen, bei dem eine stromführende Wicklung innerhalb eines Kerns mit einer Folie stabilisiert wird.

Aus DE 10 2013 216 210 A1 sind ineinander steckbare Wickelkörper für einen Stator eines Elektromotors bekannt, der im Stirnabschnitt des Stators angeordnet ist. Die Wickelkörper weisen Führungselemente zur Führung der Drähte auf. Dazu haben die Führungselemente Abschnitte, die als nutenförmige Führungsabschnitte vorgesehen sind. Es ist eine Art Wanne ausgeformt, die eine ganze Wicklung aufnimmt und in Form hält.

US 5 683 059 A1 offenbart einen Spulenträger für supraleitende Spulen. Der Spulenträger weist auf seiner Umfangsfläche Rillen zur Führung des Supraleiters und in Längsrichtung angeordnete Vertiefungen auf.

Ein ähnlicher Wickelkörper ist auch in dem Artikel "Experimental study on quench current of superconducting coils for 50-60 Hz use" von T. Ise (IEEE TRANSACTIONS ON APPLIED SUPERCONDUCTIVITY, IEEE SERVICE CENTER, LOS ALAMITOS, CA, US, Bd. 3, Nr. 1, S. 285-288) beschrieben.

Eine ausreichende Stabilisierung einer supraleitenden Wicklung kann mit den Stabilisierungslösungen aus dem vorgenannten Stand nicht erfolgen, da im Falle eines Kurzschlusses supraleitende Drähte aus den Nuten herausspringen können. Ausgehend von diesem Stand der Technik ist es **Aufgabe** der vorliegenden Erfindung, einen verbesserten Wickelkörper bereitzustellen, der einer Zerstörung der supraleitenden Wicklung in einem Transformator im Strombegrenzungsfall vorbeugt.

Diese Aufgabe wird durch einen Wickelkörper für einen supraleitenden strombegrenzenden Transformator mit den Merkmalen des Anspruchs 1 gelöst.

Ferner wird die Aufgabe, einen supraleitenden strombegrenzenden Transformator vorzuschlagen, der einfach aufgebaut ist und mehrfach zur Strombegrenzung genutzt werden kann, durch den Transformator mit den Merkmalen des unabhängigen Anspruchs 9 gelöst.

Die weitere Aufgabe, eine einfache Herstellung eines Wickelkörpers für einen supraleitenden strombegrenzenden Transformator vorzuschlagen, wird durch das Verfahren mit den Merkmalen des unabhängigen Anspruchs 12 und durch das Verfahren mit den Merkmalen des unabhängigen Anspruchs 13 gelöst.

Weiterbildungen bzw. bevorzugte Ausführungsformen des Wickelkörpers, des Transformators und der Herstellungsverfahren sind in den Unteransprüchen ausgeführt.

Eine erste Ausführungsform bezieht sich auf einen Wickelkörper für eine supraleitende Sekundärwicklung für den supraleitenden strombegrenzenden Transformator, wobei der Wickelkörper eine hohlzylindrische Grundform hat. Erfindungsgemäß weist der Wickelkörper um seinen Umfang verteilt in Längsrichtung eine Vielzahl an Vertiefungen und Mantelteilstücke auf und wobei in den Mantelteilstücken in Umfangsrichtung Nuten eingearbeitet sind. Dabei kann ein supraleitender Leiter der Sekundärwicklung in einem Normalzustand so um den Wickelkörper gewickelt werden, dass der Leiter an den Mantelteilstücken anliegen, in die Nuten aufgenommen und zwischen Leiter und den Vertiefungen bzw. jeder Vertiefung ein Spalt gebildet werden kann.

"Normalzustand" im Sinne der Erfindung heißt hierbei, dass der supraleitende Leiter in seiner Form als bandförmiger Supraleiteraufbau, vorzugsweise als Dünnschichtsupraleiter (z.B. YBCO-Bandleiter), wie hergestellt, vorliegt und sich, abgekühlt unterhalb seiner kritischen Temperatur Tc, im supraleitenden Zustand befindet. Der Normalzustand entspricht in gleicher Ausprägung einem entspannten, d.h. nicht ausgedehnten Zustand des Leiters. In einem "ausgedehnten Zustand" ist der Leiter, wenn er durch die hohe Stromdichte während eines Kurzschlusses im Stromnetz von einem supraleitenden in einen normalleitenden Zustand gezwungen wird, wobei der Leiter sich durch Ohm'sche Verluste erwärmt und entsprechend seines jeweiligen Ausdehnungskoeffizienten ausdehnt.

Die Mantelteilstücke und die Vertiefungen entlang des Umfangs des Wickelkörpers können dabei alternierend angeordnet sein, so dass in einer bevorzugten Ausführungsform die äußere Mantelfläche des Wickelkörpers im Querschnitt eine Wellenstruktur bildet.

In einem Fehlerfall, wenn der supraleitende Leiter sich erhitzt und entsprechend ausdehnt, kann durch die wirkende Feldkraft der Leiter in die Vertiefungen hineingedrückt werden. In einem ausgedehnten Zustand des Leitermaterials ("ausgedehnter Leiter") kann der Leiter an dem Wickelkörper voll anliegen. Die Erfindung verhindert damit die unkontrollierte radiale Auswölbung der supraleitenden Wicklung während eines Fehlerfalls, und schützt die supraleitende Wicklung vor mechanischer Beschädigung. Vor allem wird dies durch die vertikalen Vertiefungen entlang des Umfangs des Körpers des Wicklungskörpers ermöglicht, in die der supraleitende Leiter, der um den Wickelkörper gewickelt werden kann, sich eben ausdehnen kann.

In den Mantelteilstücken sind in Umfangsrichtung, d. h., entlang des Umfangs, Nuten eingearbeitet, in die der supraleitende Leiter der Sekundärwicklung, derart aufgenommen wird, dass zwischen Leiter und Vertiefung der Spalt gebildet ist. Die Nuten ermöglichen eine geführte Wicklung eines Leiters.

Ferner sieht die Erfindung vor, dass jede Vertiefung einen gebogenen Grund, respektive eine gebogene Basis, aufweist. Dabei entspricht ein Radius des Grunds einem Radius, der größer ist als ein minimaler Biegeradius des supraleitenden Leiters. Insofern sind also die Abmessungen der Vertiefungen, d. h., auch deren Basis bzw. Grund, Rundung und Abstand größer als der minimale Biegeradius des Leiters bemessen. Vorteilhaft können die geometrischen Radien der Kontaktfläche zwischen Wicklung und dem Wickelkörper in der Erfindung so gestaltet sein, dass weder im Normalbetrieb, d. h. mit einem entspannten Leiter, noch im Kurzschlussfall, d. h. einem ausgedehnten Leiter, die minimal zulässigen Biegeradien des supraleitenden Materials unterschritten werden. Hierdurch kann ein Wickelkörper geschaffen werden, auf den ein Leiter derart gezogen werden kann, dass er im Fehlerfall vor mechanischer Beschädigung geschützt werden kann.

Die Abmessungen können in einer Weiterbildung in Korrelation mit einem mittleren thermischen Ausdehnungskoeffizienten α des supraleitenden Materials stehend abgeschätzt werden. Aufgrund des in der Regel anisotropen thermischen Ausdehnungskoeffizienten der hier zu verwendenden Hochtemperatursupraleiter, kann eine mittlere Ausdehnung oder die höchste bekannte Ausdehnung als Anhaltspunkt für maximale Ausdehnung des supraleitenden Materials dienen.

Die Nuten können in einer Weiterbildung der Erfindung entlang der Längsausrichtung des Wickelkörpers wendelförmig (helixförmig) um den Wickelkörper herum angeordnet sein. Dadurch kann eine geführte Spulenwicklung erreicht werden, ohne dass Leiter innerhalb einer einzelnen Lage übereinander liegen oder sich während eines Strombegrenzungsvorgangs unkontrolliert verschieben.

Die Anzahl und Tiefe der Vertiefungen ist abhängig von der maximalen Ausdehnung bzw. der möglichen Biegeradien (z.B. gemäß Herstellerangaben) des jeweils verwendeten supraleitenden Materials und muss daran angepasst werden. Im Beispiel eines Bandsupraleiteraufbaus, umfassend eine Edelstahlträgerfolie (Cr-Ni-Stahl) mit zumindest einem Schichtaufbau aus einer 1-5 µm dicken YBCO-Schicht und einer darauf aufbauenden Kupferschicht (Deckschicht) wurde eine Vertiefung von 2 bis 8 mm, vorzugsweise 4 bis 5 mm Tiefe bei einer Vertiefung von 80 bis 120 mm Breite vorgeschlagen, wobei 2 bis 50, vorzugsweise 8 bis 30, weiter bevorzugt 15 bis 20 Vertiefungen im Umfang des Wickelkörpers angeordnet sind und die mit Nuten versehenen Mantelteilstücke zwischen jeweils zwei Vertiefungen vorzugsweise zwischen 30 und 100 mm breit sind. Vorzugsweise sind die Vertiefungen und Mantelteilstücke jeweils in ihren Abmessungen gleich und/oder über den Umfang des Wickelkörpers in gleichen Abständen zueinander angeordnet. Der Bandsupraleiteraufbau weist dabei eine Schichtverbunddicke zwischen 50 bis 500 µm, vorzugsweise 100 bis 400 µm, weiter bevorzugt zwischen 200 und 300 µm auf (obere und untere Grenze sind unabhängig voneinander zu sehen). Ein erfolgreicher Versuch wurde mit diesem Aufbau mit Bandsupraleitern mit 350 µm Schichtverbunddicke an 18 Vertiefungen mit 4 mm Tiefe und 100 mm Breite und dazwischen liegenden Mantelstücke mit 20 mm Breite durchgeführt, wobei jeweils zwei Bandsupraleiter übereinander angeordnet waren.

Auch kann erfindungsgemäß vorgesehen sein, dass der Wickelkörper aus glasfaserverstärktem Kunststoff besteht. Dieses Material ist für die Nutzung innerhalb von kryogenen Flüssigkeiten besonders beständig, robust und ist nicht elektrisch leitfähig. In einer alternativen Ausbildung der Erfindung kann auch vorgesehen sein, dass andere, ähnlich geeignete Materialien Verwendung finden können. So können unverstärkte Kunststoffe genutzt werden, die gegossen oder gespritzt werden können.

In einer weiteren Ausführungsform kann der Wickelkörper einstückig oder mehrteilig sein. Erfindungsgemäß sind somit zwei Varianten möglich:
Ein einstückiger, aus dem Vollen hergestellter Wickelkörper und ein Wickelkörper, der aus mehreren Teilen zusammengesetzt werden kann.

In einer möglichen Ausführungsform kann der mehrteilige Wickelkörper aus einer Vielzahl Segmente aufgebaut sein, die spiralförmig um ein Stützrohr angeordnet sind. Die Segmente können in einer alternativen Ausführungsform der Erfindung auch ringförmig zusammengesetzt werden, so dass alternierend ein Stapel aus einer Lage Segmente und einem ringförmigen Abstandshalter vorliegt. Die Anordnung der Vielzahl der Segmente bildet einen Tragkörper für das supraleitende Band, das auf dem späteren Wickelkörper aufgewickelt werden soll. Die Steigung der Spirale sowie die benötigte Anzahl an Segmenten für eine Umdrehung bzw. Windung oder einen Kreis sind durch die Geometrie der Segmente bzw. durch ihre Abmessungen vorgegeben.

Das Stützrohr kann die Spirale oder Stapel aus Segmenten halten oder nur während der Herstellung zur Stabilisierung dienen. Weiter verleiht das innenliegende Stützrohr dem Gesamtaufbau der Wicklung Stabilität in radialer Richtung zum Wiederstehen der magnetischen Kräftewirkung im Falle großer auftretender Ströme während eines Kurzschlusses. Dabei ist der Wickelkörper insofern skalierbar, da durch Erweiterung in Längsrichtung einfach weitere Segmente spiralförmig um ein bspw. längeres Stützrohr der Wickelkörper einfach verlängert werden kann. So kann auch ein kürzerer Wickelkörper realisiert werden oder eben den jeweiligen Rahmenbedingungen im Kryostaten angepasst werden. Die einzelnen Bestandteile des resultierenden Gesamtaufbaus sind einfach und kostengünstig herzustellen.

Jedes Segment kann eine längliche, in sich gebogene Form haben, die eine Wellenform zeigen kann. Dabei kann jedes Segment an seinen Stirnseiten Verbindungselemente aufweisen, wobei ein erstes Verbindungselement eines ersten Segments zu einem zweiten Verbindungelement eines nachfolgenden Verbindungselements korrespondierend ausgebildet sein kann. So sind Zapfen-Loch-Verbindungselemente möglich: Das erste Verbindungselement kann ein Zapfen mit einem rechteckigen oder runden Querschnitt sein. Das zweite Verbindungselement ein Sackloch oder Zapfenloch mit den entsprechend zu dem ersten Verbindungselement korrespondierenden Abmessungen. Je nach Anwendung können auch andere Verbindungselemente sinnvoll sein. Bevorzugt kann das beschriebene Zapfen-Loch-System verwendet werden, da es eine gute mechanische Festigkeit hat. Die Segmente haben an ihrer Konturseite, die nach außen von dem Wickelkörper weg weist, Radien, die keine mechanische Beschädigung der supraleitenden Wicklung durch Unterschreitung des minimalen Biegeradius zulassen. Die Segmente können mit üblichen Herstellungsverfahren, wie Spritzgussverfahren, Strangzieh- oder Strangpressverfahren mit einer kurzen zusätzlichen Nachbearbeitung aus einem geeigneten Kunststoff in großer Stückzahl hergestellt werden.

Ferner können in Längsrichtung des Wickelkörpers zwischen benachbarten Segmenten Abstandshalter angeordnet sein. Die Abstandshalter können kreisbogenförmig sein und entsprechend der Anordnung der Segmente spiralförmig oder ringförmig angeordnet sein. Eine weitere Ausführungsform der Erfindung kann vorschlagen, dass die Abstandshalter eine Länge aufweisen, die größer oder gleich den Abmessungen der Segmente in Umfangsrichtung des Wickelkörpers ist. Die Abstandshalter dienen dazu, den supraleitenden Draht einerseits in Position zu halten, andererseits die Wicklungen der supraleitenden Spule elektrisch gegeneinander zu isolieren. Dafür können je nach gefordertem Wicklungsaufbau die Abstandshalter verschiedene Dicken aufweisen. Wie in den Segmenten sind auch in den Abstandshaltern Bohrungen vorgesehen, die, wenn der Wickelkörper aufgebaut ist, deckungsgleich mit den Bohrungen der Segmente angeordnet sind. Die Auslegung der Abstandshalter kann so erfolgen, dass diese die einzelnen supraleitenden Drähte oder Windungen in einer bestimmten Position halten können und gleichzeitig eine ausreichende Kühlung zulassen. Dies geschieht dadurch, dass die Anstandshalter eine Form haben, welche sie, um den Umfang der Anordnung betrachtet, nur teilweise zwischen den Segmenten des Aufbaus hervorstehen lassen. Die Fixierung der Position der supraleitenden Drähte erfolgt lediglich an diesen Positionen, alle weiteren Teilstücke entlang der supraleitenden Wicklung sind im Abstandshalter ausgespart und stehen damit der ungehinderten Zirkulation des Kühlmediums zur Verfügung. Die Abstandshalter können kostengünstig bspw. durch Stanzen in beliebig großen Kreiselementen hergestellt werden.

In dieser Ausführungsform der Erfindung können die einzelnen Segmente ebenfalls mit Nuten versehen sein, um die aufzuwickelnden Wicklungsdrähte sicher zu halten. Die Enden der Segmente ermöglichen aufgrund ihrer Ausgestaltung, dass sie sich bei einer Belastung durch den zu tragenden Supraleiter von außen gegenseitig stützen und zu einem kraftschlüssigen Verbund ergänzen. Das innenliegende Stützrohr dient zur weiteren Erhöhung der mechanischen Belastbarkeit des Wicklungsaufbaus, ist aber nicht unbedingt erforderlich. Das Stützrohr kann ein Rohr mit geschlossenen Seitenwänden sein und aus Kunststoff oder einem glasfaserverstärkten Kunststoff (GfK) bestehen.

Ein erfindungsgemäßer supraleitender strombegrenzender Transformator weist vorzugsweise eine normalleitende Primärwicklung auf, die um den Hauptschenkel eines Geschlossenen Eisenkerns angeordnet ist, alternativ um den Schenkel eines Eisenkerns gewickelt oder aufgebaut ist. Innerhalb der Primärwicklung ist koaxial eine supraleitende Sekundärwicklung angeordnet, wobei die supraleitende Sekundärwicklung auf einem Wickelkörper aufgewickelt ist. Der erfindungsgemäße Wickelkörper ist vorstehend beschrieben. Dabei ist ein supraleitender Leiter der Sekundärwicklung in einem Normalzustand so um den Wickelkörper gewickelt, dass der Leiter an den Mantelteilstücken angelegt und zwischen Leiter und jeder Vertiefungen ein Spalt gebildet ist.

In einer Weiterbildung der Erfindung kann der Transformator zur Kühlung der Sekundärwicklung einen Kryostaten aufweisen, in den die Sekundärwicklung in ein Kühlbad eingesetzt ist. Dabei kann der Kryostat bzw. dessen Wandung die Sekundärwicklung zur Primärwicklung beabstanden und damit einen Streuspalt bilden. In diesem Streuspalt baut sich das jeweilige Magnetfeld auf, während die Geometrie oder der Abstand der Wicklungen zueinander wesentlich die Kurzschlussspannung des Transformators beeinflusst.

Bevorzugt können Hochtemperatursupraleiter Verwendung finden. Als kryogene Flüssigkeit können verschiedene verflüssigte, kalte Gase verwendet werden, so z. B. Stickstoff oder im Falle von geschlossenen, d.h. allseitig isolierten Badkryostaten ein wesentlich kälteres flüssiges Helium. Aus Kostengründen findet jedoch meist flüssiger Stickstoff Verwendung.

Ein erfindungsgemäßes Verfahren dient zum Herstellen eines Wickelkörpers für einen supraleitenden strombegrenzenden Transformator. In einem ersten Schritt wird ein kreis- bzw. hohlzylindrischer GfK-Rohling bereitgestellt. Hiernach wird aus der Mantelfläche des Rohlings in Längsrichtung eine Mehrzahl an Vertiefungen ausgefräst, die äquidistant um den Umfang des Rohlings angeordnet sind. Hierdurch kann im Querschnitt des Rohlings eine Wellenstruktur erzeugt werden. Danach werden in einem weiteren Schritt auf den verbleibenden Mantelflächenteilstücken Nuten entlang des Umfangs des Rohlings ausgefräst, um den supraleitenden Leiter in den Nuten aufnehmen zu können.

Die zu wählenden Abmessungen sind dabei von den Abmessungen der supraleitenden Drähte abhängig, die um den Wickelkörper gewickelt werden sollen. Die Ausführung der beiden letztgenannten Schritte kann auch in umgekehrter Reihenfolge ablaufen, abhängig von dem zu bearbeitenden Material.

In einem weiteren möglichen Schritt kann während dem Einbringen der Nuten, der Rohling um eine bestimmte Vorschubgeschwindigkeit in Längsrichtung bewegt werden, so dass die Nuten nach Fertigstellung des Wickelkörpers spiralförmig angeordnet sind. Damit kann eine Wicklung später leicht und simpel eingefädelt werden.

In einem Herstellungsverfahren für einen mehrteiligen Wickelkörper für einen supraleitenden strombegrenzenden Transformator wird in einem ersten Schritt das kreiszylindrische Stützrohr, eine benötigte Anzahl an Segmenten und Abstandshaltern bereitgestellt. Die einzelnen Segmente werden mit Hilfe ihrer Verbindungselemente hintereinander angeordnet. Die Segmente werden spiralförmig um das Stützrohr angeordnet wobei ein vorausgegangenes Segment und ein nachfolgendes Segment zusammengesteckt werden und eine Spirale gebildet wird, unter Zwischenlage der Abstandshalter zwischen einer Windung der Spirale zu einer benachbarten Spiralwindung.

Weitere Ausführungsformen, optionale Ausgestaltungen von Details sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung. Dabei zeigen:
**Fig.1** einen Halbschnitt durch einen erfindungsgemäßen Transformator,
**Fig.2** eine perspektivische Ansicht eines erfindungsgemäßen Wicklungskörpers,
**Fig.3** eine Detailansicht eines Randbereiches des Wicklungskörpers,
**Fig.4** eine Detailansicht Querschnittes des Wicklungskörpers
Fig. 5 eine perspektivische Ansicht eines noch nicht vollständig zusammengebautes, mehrteiligen Wicklungskörpers,
Fig. 6 eine Detailansicht der nach Ausschnitt C aus Fig. 5,
Fig. 7 eine Seitenansicht des mehrteiligen Wicklungskörpers,
Fig. 8 eine perspektivische Ansicht eines Segments des mehrteiligen Wicklungskörpers,
Fig. 9 eine Draufsicht auf ein Segment,
Fig. 10 eine schematische perspektivische Ansicht und
Fig. 11 eine schematische Draufsicht auf einen Abstandhalter.

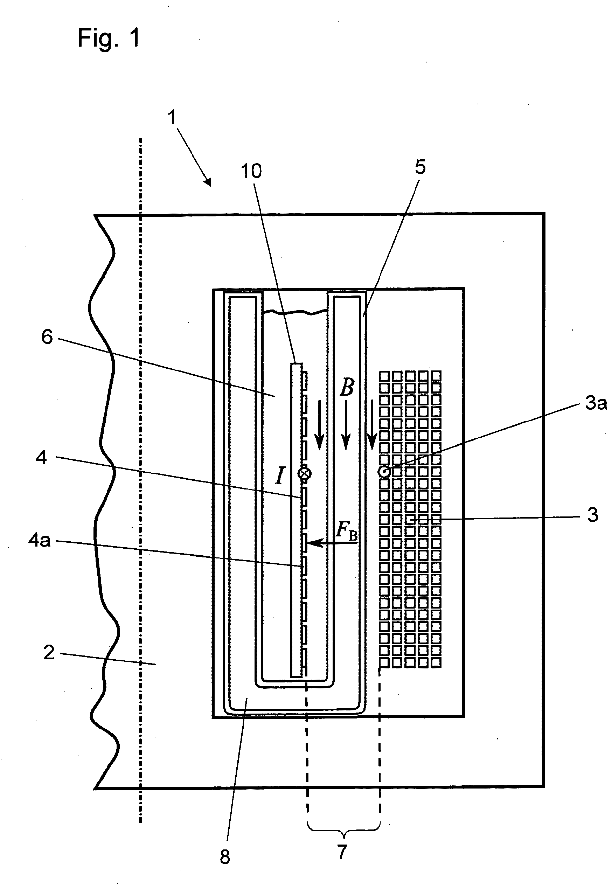

In **Fig.1** weist ein supraleitender strombegrenzender Transformator 1 einen Eisenkern 2 auf, der eine normal leitende Primärwicklung 3 umschließt. Eine Leitung 3a ist mit einem Symbol für die Richtung des elektrischen Stroms gekennzeichnet - in **Fig.1** ist der Strom in der Primärwicklung **3** so gerichtet, dass er aus der Bildebene heraustritt (dieser Zustand stellt im Falle einer alternierenden Wechselspannung die Richtungen von nur einer Halbwelle dar, die Richtungen drehen sich mit der Polung um).

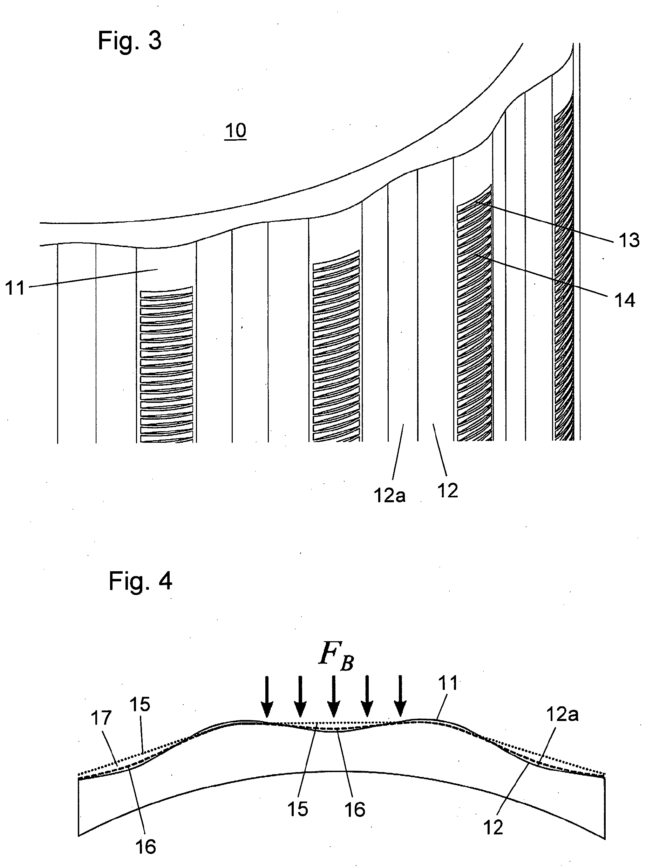

Koaxial innerhalb der Primärwicklung **3** ist eine Sekundärwicklung **4** angeordnet, deren Leitungen **4a** (vgl. **15** in **Fig.4****)** aus einem supraleitenden Material (z.B. umfassend ReBCO = Rare Earth-Barium-Kupferoxid, Dünnschichtbandleiter oder BSCO = Bismut-Strontium-Calcium-Kupferoxid-Bandleiter) bestehen. Die Sekundärwicklung **4** ist hier aus einer Wicklungsschicht aus dem supraleitenden Leiter **4a** aufgebaut, die in **Fig.1** so von Strom durchflossen ist, dass der Strom in die Bildebene eintritt (bzw. je nach Polung austritt).

Damit das Material der Sekundärwicklung **4** auch in einen supraleitenden Zustand versetzt werden kann, ist ein Kryostat **5** mit einem Kühlbad **6** vorgesehen, der im Längsschnitt U-förmig die Sekundärwicklung **4** zu drei Seiten umgibt, wobei die gesamte Sekundärwicklung von kryogener Kühlflüssigkeit (z.B. flüssiger Stickstoff) im Kühlbad umgeben ist und so wenig kryogene Flüssigkeit benötigt wird. Der Kryostat **5** ist aus glasfaserverstärktem Kunststoff und hat einen evakuierten Innenraum 8, der zur Isolation des Kühlbades **6** dient.

Sekundärwicklung **4** und Primärwicklung **3** sind in radialer Richtung zueinander beabstandet angeordnet, so dass sie nicht direkt benachbart sind, sondern ein Streuspalt **7** gebildet wird. In diesem Streuspalt **7** bildet sich ein Magnetfeld B aus. Der Streuspalt bildet sich im Transformator zwischen Primär- und Sekundärwicklung aus. Die Abmessung hier ist grundsätzlich vergleichbar mit der Abmessung eines konventionellen Transformators.

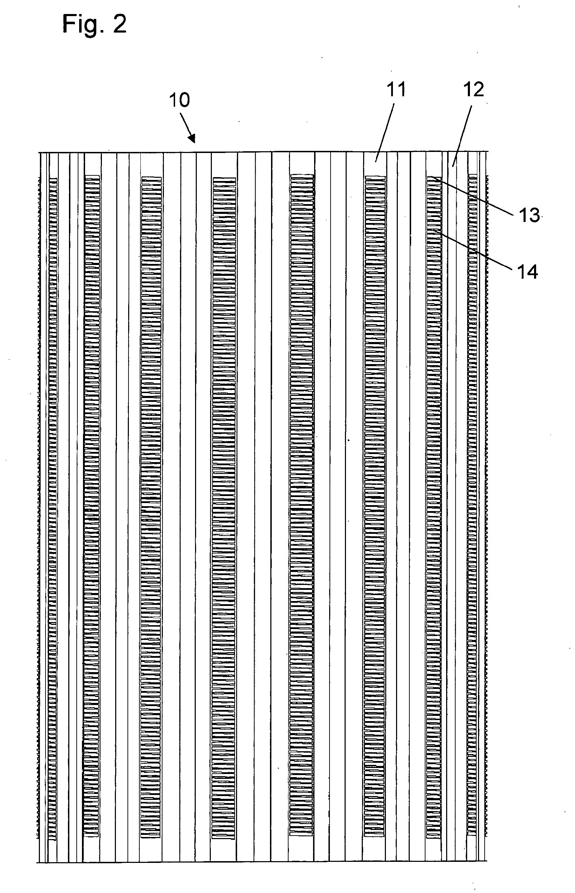

Die Sekundärwicklung **4** ist ferner zur stabilen Spulenbildung auf einem Wickelkörper **10** aufgewickelt, der aus einem nichtleitenden Material wie glasfaserverstärktem Kunststoff besteht. Der Wickelköper **10** zeigt in **Fig.2** bis **4** eine im Wesentlichen kreiszylindrische Form. Entlang seines Umfangs zeigen der Wickelkörper **10,** Vertiefungen **12** und verbleibende Mantelteilstücke **11,** die abwechselnd zueinander angeordnet sind. Diese sind so alternierend angeordnet, dass sie in einem Querschnitt, wie in **Fig.3** und **Fig.4** zu sehen, eine Wellenstruktur entlang des Umfangs bilden. In den Mantelteilstücken **11** sind in Umfangsrichtung Nuten **14** eingearbeitet. Diese Nuten **14** werden von Erhebungen **13** begrenzt. Die Nuten **14** und Erhebungen **13** sind dabei so bemessen, dass ein supraleitender Leiter **15** der Sekundärwicklung **4** gehalten werden kann und eine gleichmäßige Wicklung um den Wickelkörper **10** erfolgen kann. Die Abmessungen können dabei an den Leiter **15** angepasst sein.

Liegt der supraleitende Leiter **15** in den Nuten **14** aufgenommen, so ergibt sich, wie **Fig.4** darstellt, dass der Leiter **15** in den Mantelteilstücken **11** zwischen den Erhebungen **13** aufgenommen ist und über die Vertiefung **12** gespannt ist. Dadurch wird ein Spalt **17** gebildet, der in etwa bzw. mindestens die Längenausdehnung in einem Kurzschlussfall des Leiters **15** aufnehmen kann. Die Vertiefung **12** weist dabei einen Grund **12a** auf, der in einer vorbestimmten Krümmung mit definiertem Radius gebogen ist. Dieser Grund bildet eine Basis der Vertiefung. Dieser Radius ist dabei größer als ein minimaler Biegeradius des supraleitenden Leiters **15.** Damit kann sichergestellt werden, dass in einem Kurzschlussfall der supraleitende Leiter **15** als ausgedehnter Leiter **16** in die Vertiefungen **12** vollständig aufgenommen werden kann und durch die entstehende Biegung nicht einfach bricht oder in einer anderen Art und Weise beschädigt wird.

In einem Kurzschlussfall dehnt sich der Leiter **15** der Primärwicklung **4** aus und wird durch das magnetische Streufeld B einer Krafteinwirkung F_{B} unterzogen. Dabei wird der Leiter als ausgedehnter Leiter **16** in die Vertiefungen **12** des Wickelkörpers **10** gedrückt. Dies ist in **Fig.4** durch den weiteren Leiterverlauf des ausgedehnten Leiters **16** im Vergleich zu dem Verlauf des entspannten Leiters **15** dargestellt. Dies wird der thermische Längenausdehnung des Leiters gerecht, wodurch es nicht zu einer radialen Auswölbung des Leiters **15** kommt, wie dies beim konventionellen Wickelkörperaufbau der Fall sein kann.

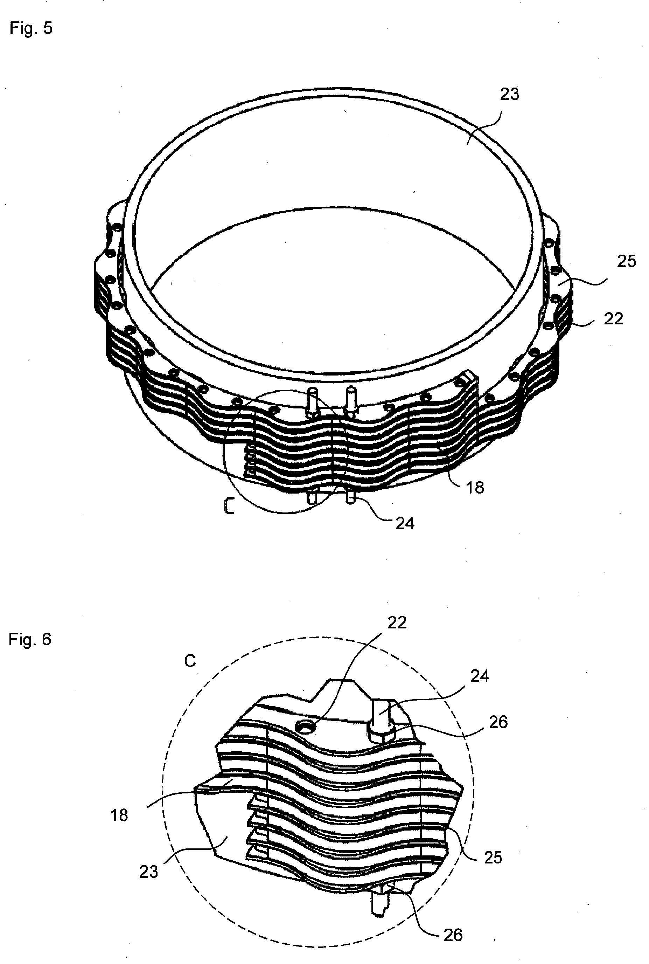

Der Wickelkörper nach den in **Fig. 1** bis **4** gezeigten Variante ist einstückig. In einer weiteren Variante ist der Wickelkörper, wie in **Fig. 5** bis **11** gezeigt, mehrteilig und aus einer Vielzahl an einzelnen Segmenten 18 zusammengesetzt.

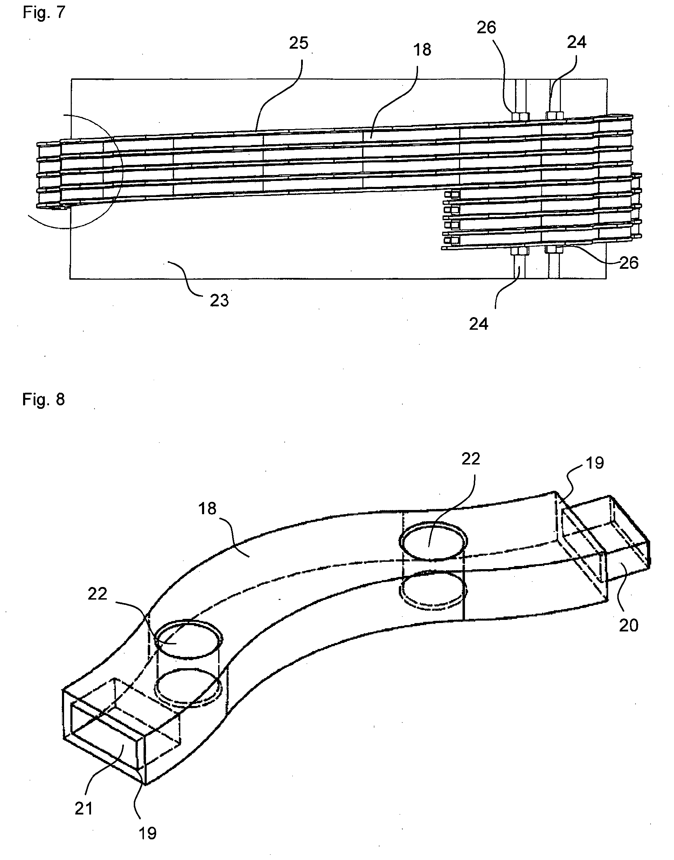

Eine Vielzahl an einzelnen Segmenten 18 ist spiralförmig um ein Stützrohr 23 angeordnet, wie **Fig. 5** und **Fig. 7** zeigen, um den Wickelkörper 10 zu bilden. Dabei ist der Wickelkörper insofern skalierbar, da durch Erweiterung in Längsrichtung einfach weitere Segmente 18 spiralförmig um ein bspw. längeres Stützrohr 23 der Wickelkörper 10 einfach verlängert werden kann. So kann auch ein kürzerer Wickelkörper realisiert werden oder eben den jeweiligen Rahmenbedingungen im Kryostaten 5 angepasst werden. Das Stützrohr 23 kann zur Stabilisierung der Segment-Spirale dienen. Der in der **Fig. 5** dargestellte Wickelkörper 10 zeigt eine Möglichkeit der Anordnung, in der vier supraleitende Drähte oder supraleitende Verbände aus Drähten oder Bandleitern parallel geführt werden können, als sogenannte viergängige Spirale.

Ausschnitt C aus **Fig. 5****,** der in **Fig. 6** vergrößert dargestellt ist, zeigt die Befestigung der Wickelkörperelemente Segmente 18 und Abstandshalter 25. Die Segmente 18 und Abstandshalter 25 weisen Bohrungen 22 auf. Durch zwei dieser Bohrungen 22 sind Befestigungsstangen 24 geführt und mit Muttern 26 befestigt. Befestigungsstangen 24 sind Gewindestangen oder Ähnliches, die mit Verschraubungselementen, bspw. den Muttern 26 verschraubt sind. Diese sind gegebenenfalls aus einem nichtleitenden oder nicht ferromagnetischen Material zu wählen. Die Anordnung aus Segmenten 18 und Abstandshalter 25 wird so gesichert und gibt einen guten Halt für die aufzubringende Wicklung 4. Die Bohrungen 22 dienen somit der Aufnahme der Befestigungsstangen 24, die die Gesamtanordnung in axialer Richtung zusammenpressen. Die Stangen 24 können z. B. als GfK-Gewindestangen ausgeführt sein, wobei theoretisch sogar metallische Gewindestangen verwendet werden können.

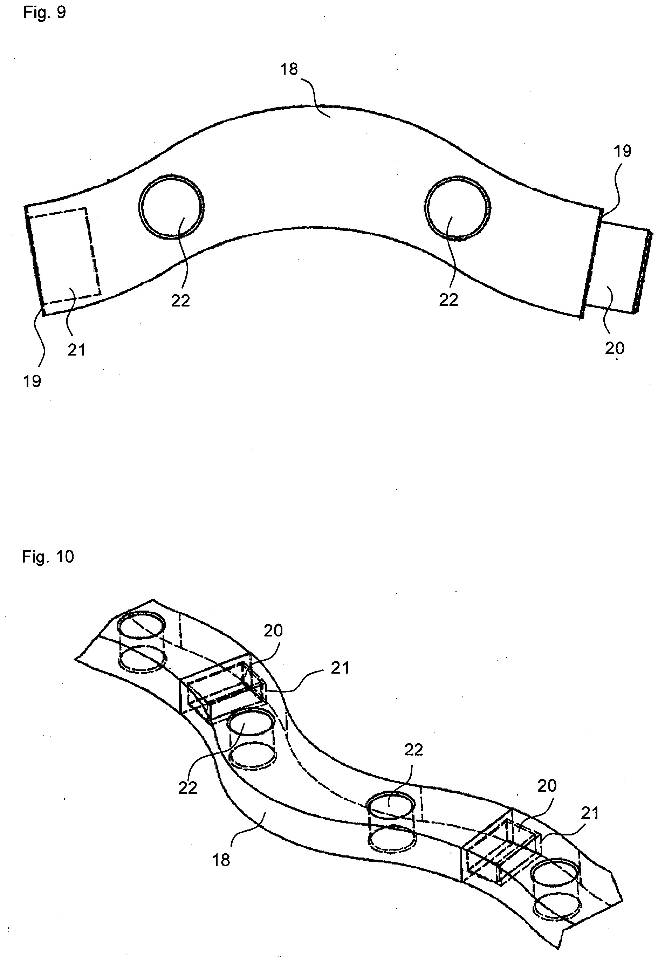

Jedes Segment 18 hat nach **Fig.8** bis **10** eine im Wesentlichen längliche, in sich gebogene Grundform, die der Ausprägung einer sich wiederholenden Wellenform entspricht, wobei nach **Fig. 9** die Form von links nach rechts an einem Minimum der Wellenform beginnt und dieser über deren Maximum wieder zu einem Minimum hin folgt.

Das Segment 18 hat an seinen Stirnseiten 19 Verbindungselemente 20 und 21. Ein erstes Verbindungselement 20 ist ein Zapfen 20 mit rechteckigem Querschnitt und ein zweites Verbindungelement 21 ist korrespondierend zu dem Zapfen 20 als Ausnehmung in Form eines Sacklochs geformt. Die Form des Sacklochs 21 ist dem Zapfen 20 so nachgebildet, so dass die Verbindungselemente 20, 21 zweier benachbarter Segmente 18 ineinander greifen.

In Fig. 10 ist ein Segment 18 gezeigt, dass mit zwei benachbarten Segmenten zusammengesteckt ist - hierbei ist sichtbar gemacht, dass jeder Zapfen 20 in ein Sackloch 21 entsprechend eingreift. Die Stirnseiten 19 der zueinander benachbarten Segmente 18 liegen dabei aneinander an, so dass eine durchgehende wellenförmige Kontur zur späteren Bewicklung mit supraleitendem Material gebildet wird.

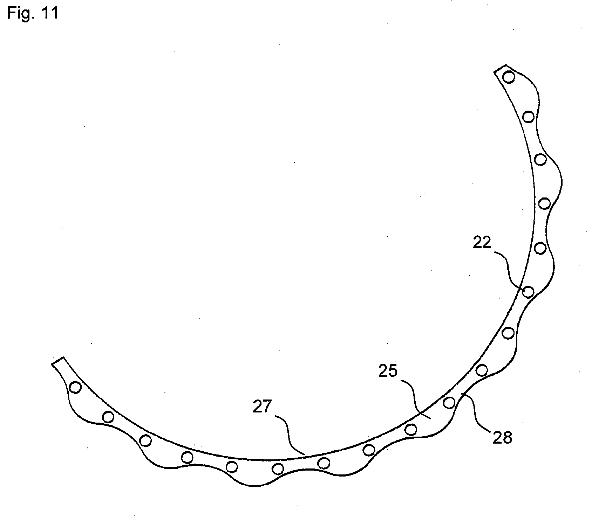

In Längsrichtung des Wickelkörpers 10 sind zwischen benachbarten Segmenten 18 die Abstandshalter 25 angeordnet. Ein solcher Abstandshalter hat nach **Fig. 11** die Form eines Teilkreises oder Kreisbogens und ist in den Konturen den Segmenten 18 nachgebildet. Eine Innenkontur 27, die zum Stützrohr 23 weist, ist kreisbogenförmig, entsprechend der Umfangsbiegung des Stützrohres 23. Eine Außenkontur 28 ist wellenförmig, wobei die Wellung der Kontur angepasst ist, die durch die aneinander gereihten Segmente 18 gebildet wird. Die Abstandshalter 25 haben dabei eine Länge, die einem Vielfachen der Segmente 18 entspricht, also größer oder gleich den Abmessungen der Segmente 18 in Umfangsrichtung des Wickelkörpers 10 entspricht. Die Abstandshalter können z.B. aus Kunststofffolien ausgestanzt werden, somit liegen diese für jede Windung in der Wicklung separat vor und müssen schichtweise zwischen die einzelnen Segmentanordnungen eingelegt werden

### BEZUGSZEICHENLISTE

- 1: Transformator
- 2: Eisenkern
- 3: Primärwicklung
- 3a: Elektrischer Leiter Primärwicklung
- 4: Sekundärwicklung
- 4a: Elektrischer Leiter Sekundärwicklung
- 5: Kryostat
- 6: Kühlbad
- 7: Streuspalt
- 8: Evakuierter Innenraum Kryostat
- 10: Wickelkörper
- 11: Mantelteilstück
- 12: Vertiefung
- 12a: Grund Vertiefung
- 13: Erhebung bzw. Begrenzung
- 14: Nut
- 15: Entspannter Leiter
- 16: Ausgedehnter Leiter
- 17: Spalt
- 18: Segment
- 19: Stirnseite
- 20: Verbindungselement Zapfen
- 21: Verbindungselement Bohrung
- 22: Bohrungen
- 23: Stützrohr
- 24: Befestigungsstange
- 25: Abstandshalter
- 26: Befestigungsmutter
- 27: Innenkontur
- 28: Außenkontur

## Patentansprüche

1. Wickelkörper **(10)** für eine supraleitende Sekundärwicklung **(4)** für einen supraleitenden strombegrenzenden Transformator, wobei der Wickelkörper **(10)** eine hohlzylindrische Grundform hat, wobei der Wickelkörper **(10)** um seinen Umfang verteilt in Längsrichtung eine Vielzahl an Vertiefungen **(12)** und Mantelteilstücke **(11)** aufweist, wobei in den Mantelteilstücken (11) in Umfangsrichtung Nuten (14) eingearbeitet sind, wobei ein supraleitender Leiter **(4a, 15)** der Sekundärwicklung **(4)** in einem Normalzustand so um den Wickelkörper **(10)** wickelbar ist, dass der Leiter **(4a, 15)** an den Mantelteilstücken **(11)** anlegbar, in die Nuten (14) aufnehmbar und zwischen Leiter **(4a, 15)** und jeder Vertiefungen **(12)** ein Spalt **(17)** bildbar ist,
**dadurch gekennzeichnet, dass**
jede Vertiefung **(12)** einen zu einer Längsachse des Wickelkörpers **(10)** konkav gebogenen Grund **(12a)** aufweist, wobei ein Radius des Grunds **(12a)** einem Radius entspricht, der größer ist als ein minimaler Biegeradius des supraleitenden Leiters **(4a, 15).**

2. Wickelkörper **(10)** nach Anspruch 1,
**dadurch gekennzeichnet, dass**
die Nuten **(14)** entlang der Längsausrichtung des Wickelkörpers **(10)** spiralförmig um den Wickelkörper **(10)** herum angeordnet sind.

3. Wickelkörper **(10)** nach einem der Ansprüche 1 bis 2,
**dadurch gekennzeichnet, dass**
die Anzahl der Vertiefungen **(12)** geradzahlig ist, wobei die Anzahl bevorzugt in einem Bereich von 8 bis 30 liegt.

4. Wickelkörper **(10)** nach einem der Ansprüche 1 bis 3,
**dadurch gekennzeichnet, dass**
der Wickelkörper **(10)** einstückig oder mehrteilig ist.

5. Wickelkörper **(10)** nach Anspruch 4,
**dadurch gekennzeichnet, dass**
der mehrteilige Wickelkörper (10) aus einer Vielzahl Segmente (18) aufgebaut ist, die spiralförmig um ein Stützrohr (23) angeordnet sind.

6. Wickelkörper **(10)** nach Anspruch 5,
**dadurch gekennzeichnet, dass**
in Längsrichtung des Wickelkörpers (10) zwischen benachbarten Segmenten (18) Abstandshalter (25) angeordnet sind.

7. Wickelkörper **(10)** nach Anspruch 5 oder 6,
**dadurch gekennzeichnet, dass**
jedes Segment (18) eine längliche, gebogene Form aufweist, die Wellenform hat, wobei jedes Segment (18) an seinen Stirnseiten (19) Verbindungselemente (20, 21) aufweist, wobei ein erstes Verbindungselement (20) eines ersten Segments (18) zu einem zweiten Verbindungelement (21) eines nachfolgenden Verbindungselements (20, 21) korrespondierend ausgebildet ist.

8. Wickelkörper (10) nach einem der Ansprüche 6 bis 7,
**dadurch gekennzeichnet, dass**
die Abstandshalter (25) eine Länge aufweisen, die größer oder gleich den Abmessungen der Segmente (18) in Umfangsrichtung des Wickelkörpers (10) entspricht.

9. Supraleitender strombegrenzender Transformator **(1),**
der eine in einem Eisenkern **(2)** eingesetzte normalleitende Primärwicklung **(3)** aufweist, in der koaxial eine supraleitende Sekundärwicklung **(4)** angeordnet ist, wobei die supraleitende Sekundärwicklung **(4)** auf einen Wickelkörper aufgewickelt ist, **dadurch gekennzeichnet, dass**
der Wickelkörper ein Wickelkörper **(10)** nach einem der Ansprüche 1 bis 8 ist, wobei ein supraleitender Leiter **(4a, 15)** der Sekundärwicklung **(4)** in einem Normalzustand so um den Wickelkörper **(10)** gewickelt ist, dass der Leiter **(4a, 15)** an den Mantelteilstücken **(11)** angelegt und zwischen Leiter **(4a, 15)** und jeder Vertiefungen **(12)** ein Spalt **(17)** gebildet ist.

10. Transformator **(1)** nach Anspruch 9,
**dadurch gekennzeichnet, dass**
der Transformator **(1)** zur Kühlung der Sekundärwicklung **(4)** einen Kryostaten **(5)** aufweist, in dem die Sekundärwicklung **(4)** in ein Kühlbad **(6)** eingesetzt ist, wobei die Sekundärwicklung **(4)** zur Primärwicklung **(3)** beabstandet ist und einen Streuspalt **(7)** bildet.

11. Verfahren zum Herstellen eines einstückigen Wickelkörpers **(10)** nach zumindest einem der Ansprüche 1 bis 4 für einen supraleitenden strombegrenzenden Transformator **(1), umfassend die Schritte**
- Bereitstellen eines kreiszylindrischen GfK-Rohlings;
- aus der Mantelfläche des Rohlings in Längsrichtung Ausfräsen einer Mehrzahl an äquidistant um den Umfang des Rohlings angeordneter Vertiefungen (12), dadurch im Querschnitt des Rohlings Erzeugen einer Wellenstruktur;
- auf den verbleibenden Mantelfläche-Teilstücken **(11)** Ausfräsen von Nuten **(14)** entlang des Umfangs des Rohlings.

12. Verfahren nach Anspruch 11,
**umfassend den Schritt**
- während des Einbringens der Nuten **(14)** Bewegen des Rohlings um eine bestimmte Vorschubgeschwindigkeit in Längsrichtung, so dass die Nuten **(14)** nach Fertigstellen des Wickelkörpers **(10)** spiralförmig angeordnet sind.

13. Verfahren zum Herstellen eines mehrteiligen Wickelkörpers **(10)** nach zumindest einem der Ansprüche 5 bis 8 für einen supraleitenden strombegrenzenden Transformator **(1), umfassend die Schritte**
- Bereitstellen des kreiszylindrischen Stützrohrs (23), der Vielzahl an Segmenten (18) und Abstandshalter (25);'
- spiralförmig Anordnen der Segmente (18) um das Stützrohr (23), dabei Zusammenstecken eines nachfolgenden Segments (18) an ein vorausgegangenes Segment (18) unter Zwischenlage der Abstandshalter (25) zwischen einer Windung der Spirale zu einer benachbarten Windung der Spirale.

## Claims

1. Winding body **(10)** for a superconductive secondary winding **(4)** for a superconductive current-limiting transformer, the winding body **(10)** having a hollow-cylindrical basic shape, the winding body **(10)** comprising a plurality of depressions **(12)** and casing portions **(11)** distributed around its circumference in a longitudinal direction, and comprising grooves **(14)** in the casing portions **(11)** in the circumferential direction, wherein the winding body **(10)** is configured such that a superconductive conductor **(4a, 15)** of the secondary winding **(4)** can be wound around the winding body **(10)** in a normal state such that the conductor **(4a, 15)** rests against the casing portions **(11)** and is received in the grooves **(14),** and wherein a gap **(17)** can be formed between the conductor **(4a, 15)** and each of the depressions (12),
**characterized in that**
each depression **(12)** comprises a bottom **(12a)** that is concavely curved with respect to a longitudinal axis of the winding body **(10),** wherein the a radius of the bottom **(12a)** corresponds to a radius that is larger than a minimum bend radius of the superconductive conductor **(4a, 15).**

2. Winding body **(10)** according to claim 1, **characterized in that** the grooves **(14)** are arranged in the longitudinal direction of the winding body so as to spiral around the winding body **(10).**

3. Winding body **(10)** according to one of the claims 1 to 2, **characterized in that** there is an even number of depressions **(12),** the number preferably being in a range from 8 to 30.

4. Winding body **(10)** according to one of the claims 1 to 3, **characterized in that** the winding body **(10)** is integral or in multiple parts.

5. Winding body **(10)** according to claim 4, **characterized in that** the multiple-part winding body **(10)** is made up of a plurality of segments **(18)** that are arranged in the shape of a spiral around a support tube **(23).**

6. Winding body **(10)** according to claim 5, **characterized in that** the spacers **(25)** are arranged between adjacent segments **(18)** in the longitudinal direction of the winding body **(10).**

7. Winding body **(10)** according to claim 5 or 6, **characterized in that** each segment (18) has an elongate, curved shape in the shape of a wave, each segment **(18)** comprising connecting elements **(20, 21)** on end faces **(19),** a first connecting element **(20)** of a first segment **(18),** corresponding to a second connecting element **(21)** of a subsequent connecting element **(20, 21)** .

8. Winding body **(10)** according to one of the claims 6 to 7, **characterized in that** a length of the spacers **(25)** is greater than or equal to dimensions of the segments **(18)** in the circumferential direction of the winding body **(10).**

9. Superconductive current-limiting transformer **(1)** comprising a normally conductive primary winding **(3)** inserted in an iron core **(2),** a superconductive secondary winding **(4)** coaxially arranged in the iron core, the superconductive secondary winding **(4)** being wound on a winding body **characterized in that** the winding body is a winding body **(10)** according to one of claims 1 to 8 wherein a superconductive conductor **(4a, 15)** of the secondary winding **(4)** is wound around the winding body **(10)** in a normal state such that the conductor **(4a, 15)** rests against the casing portions **(11)** and a gap **(17)** is formed between the conductor **(4a, 15)** and each of the depressions **(12).**

10. Transformer **(1)** according to claim 9 **characterized in that** in order to cool the secondary winding **(4)** the transformer **(1)** comprises a cryostat **(5)** in which the secondary winding **(4)** is placed in a cooling bath **(6),** wherein the secondary winding **(4)** is placed apart from the primary winding **(3)** forming a leakage, air gap **(7).**

11. Method for producing an integral winding body **(10)** according to at least one of the claims 1 to 4 for a superconductive current-limiting transformer **(1) comprising the steps:**
- Providing a circular-cylindrical GFRP blank;
- Milling out a plurality of depressions from a lateral surface of the blank in the longitudinal direction and arranging the depressions **(12)** so as to be equidistant around a circumference of the blank, thereby producing a wave-like structure in cross section of the blank;
- Milling out grooves **(14)** along the circumference of the blank on the remaining lateral surface portions **(11).**

12. Method according to claim 11 comprising the step of moving the blank in the longitudinal direction at a specific advancement speed when milling out the grooves **(14),** so that the grooves **(14)** are arranged in the shape of a spiral when the winding body **(10)** is finished.

13. Method for producing a multiple-part winding body **(10)** according to at least one of the claims 5 to 8 for a superconductive current-limiting transformer **(1) comprising the steps:**
- Providing a circular-cylindrical support tube **(23),** a plurality of segments **(18)** and spacers **(25) ;**
- Arranging the segments **(18)** in a shape of a spiral around the support tube **(23),** thereby connecting a subsequent segment **(18)** to a preceding segment **(18)** by placing a spacer **(25)** between one winding of the spiral and an adjacent winding of the spiral.

## Revendications

1. Corps d'enroulement (10) destiné à un enroulement secondaire supraconducteur (4) d'un transformateur limiteur de courant supraconducteur, le corps d'enroulement (10) ayant la forme de base d'un cylindre creux, et comporte et répartis autour de sa périphérie en direction longitudinale un ensemble de renfoncement (12) et de tronçons d'enveloppe (11), dans les tronçons d'enveloppe (11) étant usinées des rainures (14) en direction périphérique, un conducteur supraconducteur (4a, 15) de l'enroulement secondaire (4) pouvant être enroulé dans un état normal autour du corps d'enroulement (10) de sorte qu'il puisse être appliqué sur les tronçons d'enveloppe (11), logé dans les rainures (14) et une fente (17) pouvant être formée entre le conducteur (4a, 15) et chaque renfoncement (12),
**caractérisé en ce que**
chaque renfoncement (12) comporte un fond (12a) ayant une courbure concave vers l'axe longitudinal du corps d'enroulement (10), le rayon du fond (12a) correspondant à un rayon qui est supérieur au rayon de courbure minimum du conducteur supraconducteur (4a, 15).

2. Corps d'enroulement (10) conforme à la revendication 1,
**caractérisé en ce que**
les rainures (14) sont disposées en spirale autour du corps d'enroulement (10) le long de la direction longitudinale de ce corps d'enroulement (10).

3. Corps d'enroulement (10) conforme à l'une des revendications 1 à 2,
**caractérisé en ce que**
le nombre de renfoncements (12) est un nombre entier et ce nombre est de préférence situé dans la plage de 8 à 30.

4. Corps d'enroulement (10) conforme à l'une des revendications 1 à 3,
**caractérisé en ce que**
le corps d'enroulement est en une seule pièce ou en plusieurs pièces.

5. Corps d'enroulement (10) conforme à la revendication 4,
**caractérisé en ce que**
le corps d'enroulement en plusieurs pièces (10) est constitué de plusieurs segments (18) qui sont disposés en spirale autour d'un tube de support (23).

6. Corps d'enroulement (10) conforme à la revendication 5,
**caractérisé en ce que**
des éléments d'écartement (25) sont installés dans la direction longitudinale du corps d'enroulement (10) entre des segments (18) voisins.

7. Corps d'enroulement (10) conforme à la revendication 5 ou 6,
**caractérisé en ce que**
chaque segment (18) a une forme longitudinale courbe qui a une forme d'ondes, chaque segment (18) comprenant des éléments de liaison (20, 21) sur ses faces frontales (19), un premier élément de liaison (20) d'un premier segment (18) étant réalisé en correspondance avec un second élément de liaison (21) d'un élément de liaison (20, 21) suivant.

8. Corps d'enroulement (10) conforme à l'une des revendications 6 et 7,
**caractérisé en ce que**
les éléments d'écartement (25) ont une longueur qui est supérieure ou égale aux dimensions des segments (18) dans la direction périphérique du corps d'enroulement (10).

9. Transformateur limite de courant supraconducteur (1) qui comporte un enroulement primaire (3) à conduction normale inséré dans un noyau en fer (2), dans lequel est monté co axialement un enroulement secondaire supraconducteur (4), l'enroulement secondaire supraconducteur (4) étant enroulé sur un corps d'enroulement,
**caractérisé en ce que**
le corps d'enroulement est un corps d'enroulement (10) conforme à l'une des revendications 1 à 8, dans un état normal, un conducteur supraconducteur (4a, 15) de l'enroulement secondaire (4) étant enroulé autour du corps d'enroulement (10) de sorte que ce conducteur (4a, 15) s'applique sur les tronçons enveloppe (11) et qu'un intervalle (17) soit formé entre le conducteur (4a, 15) et chaque renfoncement (12).

10. Transformateur (1) conforme à la revendication 9,
**caractérisé en ce qu'**
il comporte, pour permettre de refroidir l'enroulement secondaire (4) un cryostat (5) dans lequel est inséré l'enroulement secondaire (4) dans un bain de refroidissement (6), l'enroulement secondaire (4) étant situé à distance de l'enroulement primaire (3) et formant un intervalle de diffusion (7).

11. Procédé d'obtention d'un corps d'enroulement (10) en une seule pièce conforme à au moins l'une des revendications 1 à 4, destiné à un transformateur limite de courant supraconducteur (1), comprenant des étapes consistant à :
- se procurer une ébauche en un matériau synthétique renforcé par des fibres de verre en forme de cylindre circulaire,
- à partir de la surface enveloppe de l'ébauche, fraiser, en direction longitudinale un ensemble de renfoncement (12) situés à équidistance autour de la périphérie de cette ébauche pour former ainsi sur la section de l'ébauche une structure ondulaire,
- sur les tronçons (11) l'enveloppe restants fraiser des rainures (14) le long de la périphérie de l'ébauche.

12. Procédé conforme à la revendication 11,
comprenant une étape consistant à déplacer l'ébauche pendant la réalisation des rainures (14) avec une vitesse d'avancement déterminée en direction longitudinale de sorte que les rainures (14) soient disposées en spirale après finalisation du corps d'enroulement (10).

13. Procédé d'obtention d'un corps d'enroulement en plusieurs pièces (10) conforme à au moins l'une des revendications 5 à 8, destiné à un transformateur limite de courant supraconducteur (1) comprenant des étapes consistant à :
se procurer le tube de support en forme de cylindre circulaire (23), l'ensemble de segments (18) et les éléments d'écartement (25),
mettre en place les segments (18) en forme de spirale autour du tube de support (23), en assemblant ainsi un segment suivant (18) sur un segment précédent (18) avec interposition de l'élément d'écartement (25) entre une spire de la spirale et une spire voisine de celle-ci.
